# EUROPEAN PATENT APPLICATION

(11) **EP 2 883 977 A1**
(43) Date of publication of application: **17.06.2015**
(21) Application number: 13196725.9
(22) Date of filing: 11.12.2013
(51) Int. Cl.: C23C 4/00, F01D 5/18, F01D 5/28, B24C 1/08

(54) **Method for coating a component with holes**

(71) Applicant: Siemens Aktiengesellschaft, 80333 München (DE)
(72) Inventor: Beck, Thomas, 16341 Panketal (DE); Fischer, Jens, 13156 Berlin (DE); Geisen, Ole, 10781 Berlin (DE)

(57) **Abstract**

The present invention and the embodiments thereof relate to a method of coating a component with holes. The method includes generating a hole in the component. Thereafter, at least a portion of a surface of the component is coated with a coating material. Subsequently, at least a portion of remaining coating material within the hole is removed using a blasting process. Additionally, a plug is inserted into the hole, wherein at least a portion of the plug has a diameter less than the diameter of the hole. The plug is inserted in the hole before coating the surface with the coating material. The plug is removed from the hole after the application of the coating layer to reopen the hole.

## Description

### Field of the invention

The present invention relates to a method for coating a component having holes including the steps of generating a hole in the component, coating at least a portion of a surface of the component with a coating material and removing at least a portion of remaining coating material within the hole.

### Background

Systems such as turbines include numerous components. Some of the components have one or more holes for aiding in the functioning of the system. For example, a liner in a turbine includes one or more holes to conduct a coolant. Further, the components may require a coating such as, a thermal barrier coating, to protect the component from degradation while functioning at high temperatures. When a coating material is applied on the component the one or more holes are blocked.

Presently, reopening the one or more holes after the component is coated with the coating material is a tedious task. Complex techniques such as laser jet machining are used to remove the blockage of the one or more holes after the component is coated with a coating material. Due to the presence of thermal barrier coating, a lot of heat needs to be applied to unblock the hole. In some cases, the one or more holes are welded shut before the coating material is applied. Subsequently, after the coating material is applied, the one or more holes are drilled out. Such techniques are expensive, laborious and time consuming. Further, the reopening of the holes using the aforementioned techniques can lead to the coating layer being damaged. Therefore there is need for improved techniques for reopening holes in a coated component. A method of the aforementioned kind is known from the Patent EP 0761386 B1. The said patent discloses a method of removing excess overlay coating within cooling holes of aluminide coated gas turbine components. Abrasive slurry is forced into the cooling holes to remove the excess overlay coating.

EP 2423346 B1 also discloses a method for minimizing blockages of hole in turbine engine components. The patent '346 uses a plug which is inserted in the hole before coating the components and is removed after coating the component.

The known methods for removing a remaining coating within the holes are costly and time consuming.

Therefore, it is an object of the invention to provide a method, as described below, which allows for a fast and a cost effective reopening of holes.

The invention solves this object by that at least a portion of a remaining coating material within the hole is removed by a blasting process. According to the invention, a hole is created in the component having a diameter D1. Thereafter, at least a portion of a surface of the component including the hole is coated with a coating material. In an embodiment, the portion of the component which is coated is an outer side of the component. Subsequently, at least a portion of remaining coating material within the hole is removed, using a blasting process.

Due to the blasting process, the coating material deposited inside the hole after the application of the layer is removed in a fast and cost effective manner. In an embodiment, the hole is not entirely blocked by the coating material due to a coat down effect, based on the diameter of the hole and a thickness of the coating material. In such a case, a suitable irradiation technique, such as blasting process, is used to remove the remaining coating material in the hole, thereby reopening the hole. The blasting process involves creating a material flow which may be pressurized at a suitable level. The material flow includes a fluid which has other substances such as quartz and corundum for removing the remaining coating material within the hole. The blasting process removes the enables the removal of the remaining coating material in the hole without damaging the layer of coating material surrounding the hole.

In another embodiment of the invention, a plug is inserted into the hole, wherein at least a portion of the plug has a diameter less than the diameter of the hole. The plug facilitates in reopening the hole after the component is coated with a layer of coating material.

Initially, the hole is bored through the component in an uncoated condition. Thereafter, the plug is inserted into the hole. A layer of coating material is applied over the hole where the plug is inserted. Subsequently, the plug is extracted from the hole. Upon extracting the plug, the hole is substantially reopened. Any remaining coating material within the hole is removed using suitable blasting process.

In yet another embodiment of the invention, the plug includes a head portion and a body portion, wherein a diameter of the body portion of the plug is less than the diameter D1 of the hole and wherein the diameter of the head portion is greater than the diameter D1 of the hole. The head portion prevents the plug from slipping through the hole.

In yet another embodiment, the head portion of the plug is configured to align the body portion along a central axis of the hole. When the body portion of the plug is aligned centrally to the axis of the hole, the coating material clogging the hole is less.

In an embodiment of the invention, the body portion of the plug extends from a contact point on the hole through a thickness of the component. As a result, the coating material is deposited on a free end of the plug during the application of a layer of coating material. When the plug is extracted from the hole, the coating material deposited at the free end of the plug is substantially evicted.

In another embodiment of the invention, at least a portion of the coating material remaining within the hole is removed by a blasting process. The blasting process includes creating a material flow, which is directed through the hole. The material flow may be pressurized and directed into the hole so as to remove any coating material blocking the hole. The material flow in the blasting process includes a fluid along with a substance such as, but not limited to, quartz and corundum.

In yet another embodiment, the material flow is created using a nozzle placed at an uncoated portion of the component. The placement of the nozzle at the uncoated portion of the component reduces any damage to the layer of coating material during the blasting process.

In still yet another embodiment, the plug is composed of at least one of a metal and a non-metal. In an exemplary embodiment of the invention, the plug is made up of glass. In another exemplary embodiment, the plug is made up of a material that evaporates when heat is applied. In an exemplary embodiment, the plug is composed of a deformable material which can be molded into a required shape. Further, the plug can be made up of a mixture of substances based on the requirement.

The coating material applied on at least a portion of the component is a ceramic. In some embodiments, the coating material can be a metal alloy.

A specific embodiment of the invention is as shown in figures mentioned below:
Figure 1 illustrates a coating process of a component as performed in accordance with a state of the art;
Figure 2 illustrates a method of coating a component with holes in accordance with an embodiment of the invention;
Figure 3 illustrates a method of coating a component with holes, wherein a plug is inserted in the hole before a layer of coating material is applied on the component.

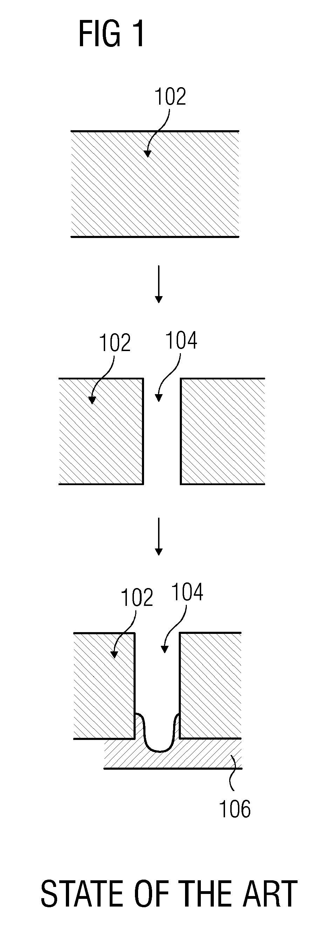

Referring to Figure 1, which illustrates a method of coating a component, in accordance with a state of the art. Figure 1 top illustrates a component 102 which is a part of a system, for example a turbine. The component 102 may have a varying thickness profile based on the requirement of the system. In a specific embodiment, the component 102 is a liner of a turbine which faces extremely high temperatures due to combustion. The component 102 may be composed of a metal such as, but not limited to, nickel, steel and aluminum. For the functioning of the system, one or more holes, such as hole 104, may be bored in the component 102, as shown in Figure 1 middle. In an example, the hole 104 is configured to circulate a coolant within the component 102. The hole 102 may be bored through a thickness of the component 102. In some embodiments, the hole 104 facilitates in circulating coolants within the system. Further, the hole 104 is bored in, one or more of, but not limited to, a linear manner and a contoured manner. Furthermore, the hole 104 has a diameter D1, which is determined based on a function of the hole 104. In an exemplary embodiment, the hole 104 has a diameter ranging from 1.5mm - 4 mm. Although the hole 104 is illustrated as an exemplary implementation of the invention, in Figure 1, one skilled in the art will understand that the hole 104 can also be implemented in any other suitable size, shape and orientation.

In accordance with the embodiment, the component 102 is coated with a layer of coating material, such as layer 106, as shown in Figure 1 bottom. In accordance with the embodiment, the layer 106 is composed of a heat resistant material, such as, ceramic and a metal alloy. In an exemplary embodiment, the coating material is sprayed on the component 102. Due to the application of the layer 106, the hole 104 may be blocked. Depending on the diameter D1 of the hole 104 and the thickness of layer 106, the hole 104 is blocked with the layer 106, as shown in Figure 1C. The coating material blocking the hole 104 needs to be removed, which is a cumbersome and a costly task. There is a risk of damaging the layer 106 while reopening the hole 104.

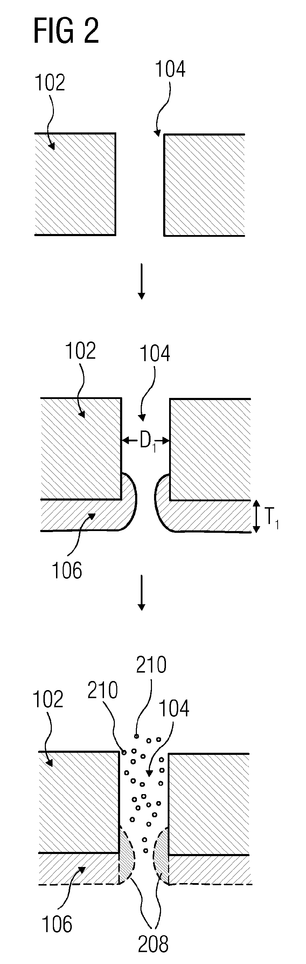

Moving on to Figures 2, which illustrates a method of coating a component with holes, in accordance with an embodiment of the invention. Figure 2 top illustrates a portion of the component 102. A hole, such as hole 104, is bored in the component 102 using a suitable boring mechanism. The hole 104 has a diameter D1. In accordance with the embodiment, the hole 104 has the diameter D1 in a range of 2 mm - 4mm, as shown in Figure 2 middle. Subsequently, a layer of coating material such as, layer 106, is applied on at least a portion of the component 102. In an exemplary embodiment, the portion of the surface of the component is an outer side of the component. In accordance with the embodiment, the layer coating material is composed of a thermally resistant material, such as, but limited to, a ceramic and a metal alloy.

Upon the application of layer 106, the hole 104 is partially blocked at the inner walls of the hole 104 due to a coat down effect, as shown in Figure 2 bottom. The layer 106 leaves a passage about a central axis of the hole 104 as shown in Figure 2C. The width of the passage in the hole 104 depends on the diameter D1 of the hole 104 and a thickness T1 of the layer 106.

After the application of the layer 106, coating material 208 blocking the hole 104 is removed, as shown in Figure 2 bottom. In an embodiment of the invention, the coating material 208 blocking the hole 104 is removed using a suitable irradiation technique such as a blasting process. In accordance with the embodiment, the blasting process includes creating a material flow 210 through the hole 104, using a nozzle. The nozzle creates a pressurized material flow, which includes, for example, a pressurized fluid and a pressurized gas. In a specific embodiment, the material flow 210 includes, a fluid which includes, at least one of, quartz and corundum. Further, the nozzle is placed at an uncoated surface of the component 102. In an exemplary embodiment, the uncoated surface of the component is an inner side of the component. In some embodiments, the nozzle can be placed at a coated end of the component 102. The blasting process removes remaining coating material in the hole 104 and renders the hole free from blockage.

In accordance with an embodiment, the blasting process can be one or more of, a dry blasting process and a wet blasting process. Based on factors such as, but not limited to, nature of coating material, size and depth of the hole 104 a suitable blasting process is used.

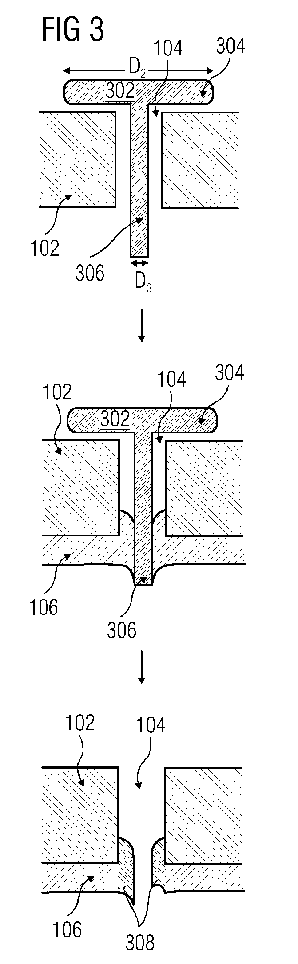

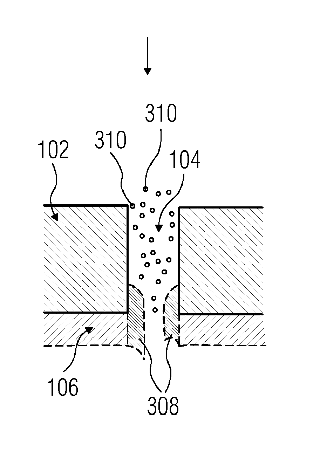

Referring now to Figures 3, which illustrates a method of coating a component with holes, wherein a plug is inserted in a hole before a layer of coating material is applied on the component, in accordance with an embodiment of the invention. As described in Figure 1 top, the component 102 includes a hole 104. The hole 104 has a diameter D1.

In accordance with the embodiment, the diameter D1 of the hole 104 is less than 1.5 mm. In such a case, a plug 302 is inserted into the hole 104, as shown in Figure 3 top. At least a portion of the plug 302 has a diameter less than that of the diameter D1 of the hole 104, thereby enabling the plug 302 to slide into the hole 104, as shown in Figure 3 top.

In accordance with the embodiment, the plug 302 includes a head portion 304 and a body portion 306, as illustrated in Figure 3 top. The head portion 304 of the plug 302 has a diameter D2 which is greater than the diameter D1 of the hole 104 and wherein a diameter D3 of the body portion 306 is less than the diameter D1 of the hole 104. In some embodiments, the plug 302 is composed of a deformable material and can be shaped as required. The plug 302 is composed of at least one of a metal and a non-metal. In an exemplary embodiment, the plug 302 is composed of glass. Although the plug 302 is illustrated as an exemplary implementation of the invention, in Figure 3 top, one skilled in the art understands that the plug 302 can also be implemented in any other suitable size and shape.

In accordance with the embodiment, the head portion 304 is configured to align the body portion 306 along a central axis of the hole 104. In some embodiments, the head portion 304 is V necked to enable the body portion 306 to be aligned along the central axis of the hole 104. In some exemplary embodiments, the head portion 304 is deformable in order to fit the plug 302 into the hole 104.It may be apparent to a person skilled in the art that the head portion 304 may be designed in a suitable manner to align the body portion 306 along the central axis.

Further, the body portion 306 extends from a contact point on the hole through a thickness of the component. The contact point, in one instance, is the rim of the hole 104 where a bottom portion of the head portion 304 rests. In an exemplary embodiment, the body portion 306 extends throughout the thickness of the component, as illustrated in Figure 3 top. The additional length of the body portion 306 enables easy removal of the plug 302 and also prevents blockage of the hole 104. In some embodiments where a single side of the component 102 is coated, the body portion 306 may not extend throughout the thickness of the component 102.

As illustrated in Figure 3 middle I, the component 102 is coated with a layer of coating material, after inserting the plug 302. The layer of coating material is similar to layer 106, as explained in Figure 1. The body portion 306 protrudes from the free end of the hole 104, as illustrated in Figure 3 top, thereby not allowing the coating material to block the hole 104.

After the layer of coating material is deposited on at least a portion of the component 102, the plug 302 is removed from the hole 104 as illustrated in Figure 3 middle II. Due to the removal of the plug 302, a passage is left unblocked within the hole 104, as shown in Figure 3 middle II. After removing the plug 302, a portion of coating material 308 remains within the hole 104.

Referring now to Figure 3 bottom, which illustrates the removal of coating material 308 inside the hole 104. In accordance with the embodiment, the remaining coating material 308 in the hole 104 is removed using a blasting process, as explained with reference to Figure 2 bottom. The blasting process includes creating a material flow 310, which is directed through the hole 104. The material flow 310 may be suitably pressurized to remove the remaining coating material within the hole 104. In some embodiments, the material flow 310 is created using a nozzle placed at an uncoated portion of the component 102.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for coating a component with a hole, comprising the steps of:
coating at least a portion of a surface around the hole of the component with a coating material; and
removing at least a portion of remaining coating material within the hole, **characterized in that,** at least a portion of the remaining coating material within the hole is removed by a blasting process.

2. The method of claim 1,
wherein the hole is generated in the component before coating the component.

3. The method of claim 1,
further comprising inserting a plug into the hole, wherein at least a portion of the plug has a diameter less than the diameter of the hole.

4. The method of claim 1,
wherein the plug comprises a head portion and a body portion, wherein a diameter of the body portion of the plug is less than a diameter D1 of the hole and wherein a diameter of the head portion is greater than the diameter D1 of the hole.

5. The head portion of the plug of claim 2, configured to align the body portion along a central axis of the hole.

6. The plug of claims 1-3,
wherein the body portion extends from a contact point on the hole through a thickness of the component.

7. The method of claim 6,
wherein the blasting process comprises creating a material flow, which is directed through the hole.

8. The method of claim 7,
wherein the material flow is created using a nozzle placed at an uncoated portion of the component, wherein the uncoated portion is an inner side of the component.

9. The plug of claim 1 to 3,
wherein the plug is composed of at least one of a metal and a non-metal.

10. The method of claim 1,
wherein the coating material is a ceramic.

11. The method of claim 1,
wherein the component is composed of at least one of a metal and a metal alloy.
